**Europäisches Patentamt**

**European Patent Office**

**Office européen des brevets**

(11) Publication number: **0 147 228**
**B1**

(12) **EUROPEAN PATENT SPECIFICATION**

(45) Date of publication of patent specification: **20.04.88**

(21) Application number: **84309074.7**

(22) Date of filing: **21.12.84**

(51) Int. Cl.⁴: **B 60 K 41/02,** F 16 D 27/16, F 16 D 37/02

(54) **System for controlling the clutch torque of an electromagnetic clutch for a vehicle.**

(30) Priority: **27.12.83 JP 251024/83**

(43) Date of publication of application:
**03.07.85 Bulletin 85/27**

(45) Publication of the grant of the patent:
**20.04.88 Bulletin 88/16**

(84) Designated Contracting States:
**CH DE FR GB IT LI NL**

(56) References cited:
**DE-A-1 157 489**
**DE-A-3 244 817**
**FR-A-1 519 747**
**FR-A-2 492 023**
**GB-A- 727 783**
**GB-A-2 113 339**
**JP-A-57 030 624**
**US-A-3 268 045**

(73) Proprietor: **FUJI JUKOGYO KABUSHIKI KAISHA**
**7-2 Nishishinjuku 1-chome Shinjuku-ku**
**Tokyo (JP)**

(72) Inventor: **Sakakiyama, Ryuzo**
**1-21 Takamatsu**
**Toshima-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling the clutch torque of an electromagnetic clutch disposed between an engine and a transmission of a motor vehicle, and more particularly to such a system which controls the variation of the clutch torque from a low clutch torque while an accelerator pedal is released to a high clutch torque when the pedal is depressed.

Japanese Patent Publication No. 57—30624 discloses a clutch control system, in which clutch torque is maintained at a value larger than the engine torque by passing a rated current through the clutch coil, as long as the vehicle is driven faster than a predetermined speed, irrespective of the condition of the accelerator pedal. In that system, when the accelerator pedal is released, irregular and abrupt fluctuations occur in engine torque and those fluctuations are transmitted to the driving system, giving an unpleasant shock to the driver. Further, because the level of the rated current needed to be supplied to the clutch at the lower engine speed while the acceleration pedal is released is high, the power of the vehicle battery is rapidly dissipated.

In order to remove those drawbacks, an attempt was made to absorb the torque variation, see e.g. DE 3244817 or GB 2113339. In the system, as shown in Figure 4, the clutch torque was lowered to a low value $T_1$ as long as the engine braking could be effected while the accelerator pedal is released; the clutch torque during the depression of accelerator pedal was fixed to a rated high value $T_2$, the value used in the conventional art.

When the accelerator pedal is depressed, the clutch torque rises from $T_1$ to $T_2$. However, since the rising speed of the torque is higher than that of engine torque, the electromagnetic clutch engages fully before the engine torque reaches a sufficient value to drive the vehicle. Accordingly, the engine speed cannot rise rapidly because of the sudden increase of load caused by rapid engagement of the clutch, As a result, the vehicle speed decreases temporarily and stumbling of the vehicle occurs at the worst. In addition, the rapid engagement of the clutch causes shock in the power transmission system.

An object of the present invention is to provide a clutch torque control system for an electromagnetic clutch which is capable of quickly increasing the engine speed in accordance with the depression of an accelerator pedal and reduce the shock in transmission system by gradually engaging the clutch when the accelerator pedal is depressed.

According to the present invention, a system for controlling the clutch torque of an electromagnetic clutch of a vehicle having an accelerator pedal comprises an accelerator switch for producing a given output signal when the accelerator pedal is depressed, and a first circuit which includes a switching means and which is arranged to control the clutch current passing through a coil of the electromagnetic clutch; characterised in that a second circuit is responsive to the given output signal of the accelerator switch for controlling the switching means so as to decrease the clutch current to a low value so that the engine speed quickly increases in accordance with depression of the accelerator pedal, and thereafter to increase the current gradually to a predetermined value.

The switching means is preferably a transistor provided in the circuit of the clutch coil, and the second circuit may comprise a logic gate circuit and a pulse train generating circuit responsive to the given output signal of the accelerator switch for producing a pulse train controlled by the logic gate circuit, the duty ratio of the pulse train gradually varying so as to increase gradually the clutch current.

The invention will be more readily understood by way of example from the following description of a control system in accordance therewith, reference being made to Figures 1 to 3 of the accompanying drawings, in which

Figure 1 is a schematic diagram showing the control system;

Figures 2(a) to (e) are waveforms of the outputs at various parts of Figure 1;

Figure 3 is a graph showing the variation of clutch torque in the system of Figure 1; and

Figure 4 is a graph showing the variation of clutch torque in a known system.

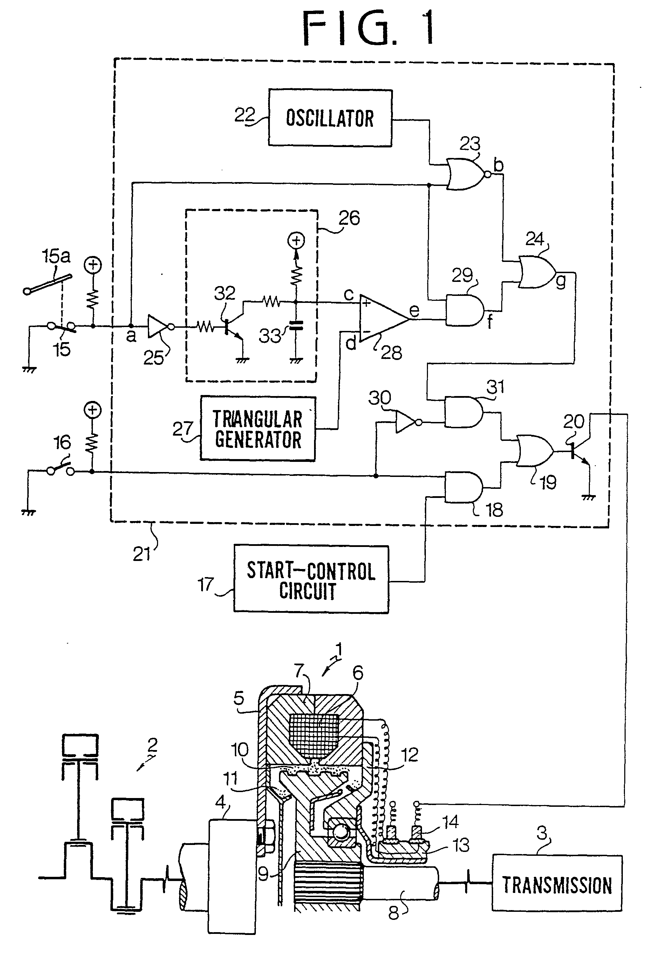

Referring to Figure 1, an electromagnetic powder clutch 1 is interposed between an engine 2 of a vehicle and a transmission 3, which may be a manual gearbox or a belt-drive infinitely variable transmission and transmits the engine torque of the vehicle wheels. The electromagnetic powder clutch 1 comprises a drive member 7 connected to a crankshaft 4 of the engine 2 through a drive plate 5, a coil 6 provided in the drive member 7, a driven member 9 having its outer periphery spaced from the inner periphery of the drive member 7 by a gap 10, and a powder chamber 11 defined between the drive member 7 and driven member 9. The powder chamber 11 is filled with powder of magnetic material. The driven member 9 is secured to an input shaft 8 of the belt-drive infinitely variable transmission 3. A holder 12 secured to the drive member 7 carries slip rings 13 which are electrically connected to the coil 6. The coil 6 is supplied through brushes 14 and slip rings 13 with a clutch current from a control unit 21.

When the magnetizing coil 6 is excited by the clutch current, drive member 7 is magnetized to produce a magnetic flux passing through the driven member 9. The magnetic powder is aggregated in the gap 10 by the magnetic flux and the driven member 9 is engaged with the drive member 7 by the powder. On the other hand, when the clutch current is cut off, the drive and driven members 7 and 9 are disengaged from one another. Where a belt-drive infinitely variable transmission 3 is employed, the transmission ratio is determined in dependence on the engine speed and the vehicle speed. When the vehicle speed is lower than a predetermined low value, the transmission ratio is at the highest ratio. When the engine speed is at high value, the transmission ratio becomes low.

An accelerator pedal switch 15 for detecting the depression of an accelerator pedal 15a is turned off to produce a high level output (a) when the pedal 15a is depressed, and is turned on to produce a low level output when the pedal is released. A vehicle speed switch 16 is turned on to produce a low level output when the vehicle speed exceeds a predetermined level, the output otherwise being at high level. The vehicle speed switch 16 and a start-control circuit 17 are connected to an AND gate 18 in the control unit 21; the output of AND gate 18 is applied to a driving transistor 20 through an OR gate 19 to control the clutch current passing through the clutch coil 6. The output (a) of the accelerator pedal switch 15 is connected to a NOR gate 23, AND gate 29 and, through an inverter 25 to a reference voltage generator 26. The output of a triangle generator 27 and the output of the reference voltage generator 26 are connected to the inputs of a comparator 28, the output of which is connected to the AND gate 29. The NOR gate is suppled with a rectangular wave pulse train from an oscillator 22. The outputs (b, f) of NOR gate 23 and AND gate 29 are applied to an OR gate 24, the output (g) of which is applied to an AND gate 31. The output of the vehicle speed switch 16 is also applied to AND gate 31 through an inverter 30. The output of AND gate 31 is connected to the other input of the OR gate 19.

The reference voltage generator 26 comprises a transistor 32 which is turned on and off in response to the level of the output (a) of the accelerator switch 15. When the accelerator pedal is released, the switch 15 is turned on, so that the transistor 32 is turned on in response to the high level from the inverter 25. Thus, the reference voltage is set to a low value by the discharge of a capacitor 33. When the transistor 28 is turned off, the reference voltage rises gradually with the charging of the capacitor 33 and reaches a high value which is higher than the peak voltage of the triangular pulses from the triangular generator 27.

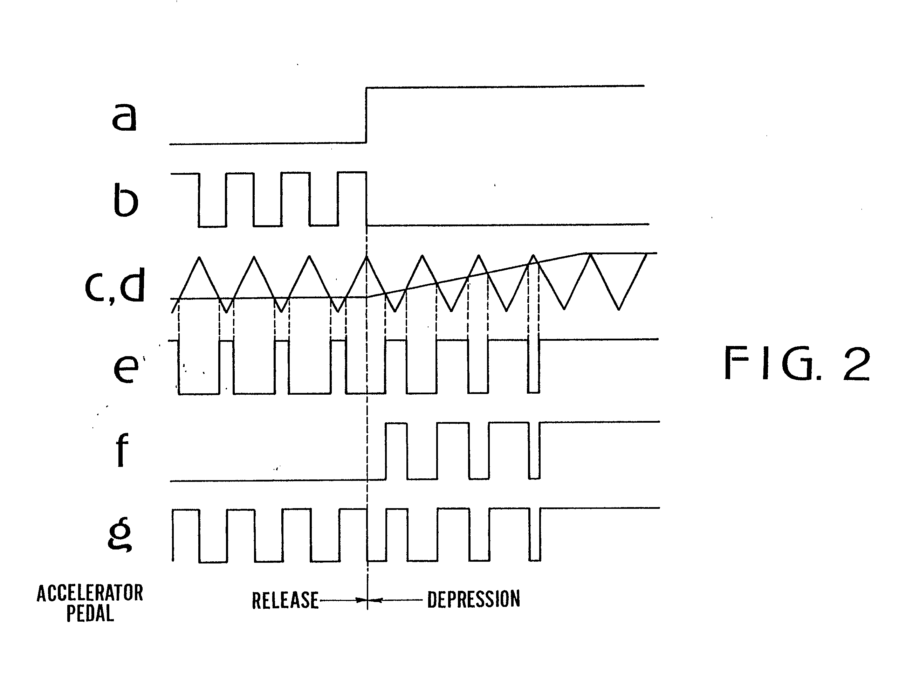

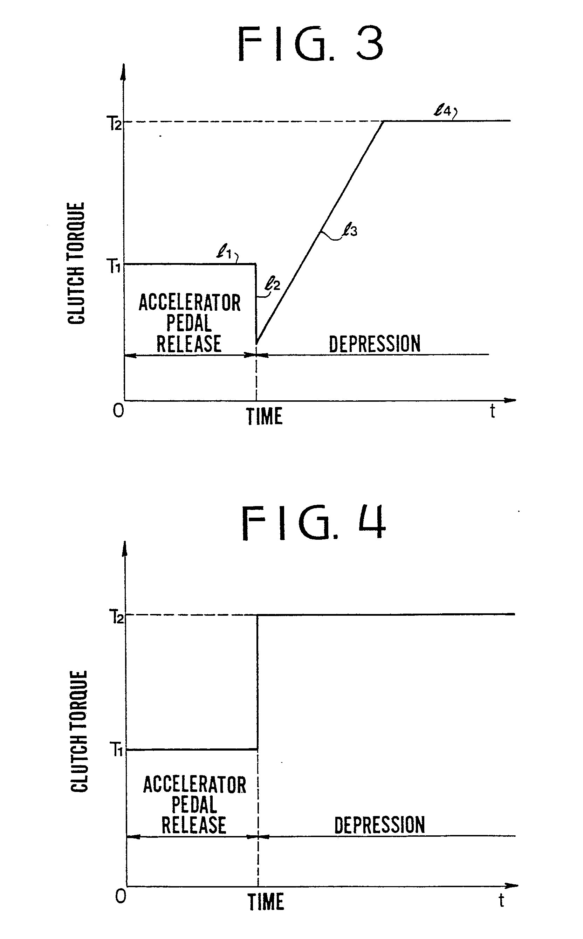

The operation of the clutch torque control system is explained hereinafter with reference to Figure 2. At the start of the vehicle, the output of the vehicle speed switch 16 is at high level. Accordingly, a signal from the start control circuit 17 is applied to the transistor 20 through the AND gate 18 and the OR gate 19, so that the clutch current is controlled by the signal from the start control circuit so as to perform a smooth start of the vehicle with increase of the engine speed. When the vehicle speed exceeds the predetermined value, the vehicle speed switch 16 is closed, so that the output of the switch 16 changes to low level. Thus, AND gate 18 is closed to cut off the signal from the start control circuit 17. In this situation, if the accelerator pedal is released, the output of the accelerator switch 15 is at low level as shown in Figure 2(a). Accordingly, AND gate 29 is closed and NOR gate 23 produces a pulse train (b) as shown in Figure 2(b). The pulses b are fed to the transistor 20 through OR gate 24, AND gate 31 and OR gate 19. Thus, clutch current dependent on the duty ratio of the pulse train (b) flows in the clutch coil 6, producing a low clutch torque $T_1$ as shown by a line $l_1$ in Figure 3.

Accordingly, the consumption of electric power is decreased and fluctuations of torque of the engine can be absorbed,

When the accelerator pedal 15a is depressed, the level of the output from the accelerator switch 15 goes to high level as shown in Figure 2(a), so that the output of the NOR gate 23 changes to low level. Therefore, only the output of the comparator 28 is supplied to the transistor 20 through AND gate 29, OR gate 24, AND gate 31 and OR gate 19. The comparator 28 compares the triangular wave pulse train (c) with the reference voltage (d) to produce a rectangular pulse train (e). The duty ratio of the pulse train (e) increases with the increase of the reference voltage (d) as shown in Figure 2(e) and (f). When the accelerator pedal is first depressed, the duty ratio is very small, so that the clutch torque decreases to a very small value as shown by a line $l_2$ in Figure 3, that value being smaller than one-third of a lock-up torque $T_2$. Accordingly, the load on the engine is very small, so that the engine speed quickly increases in accordance with the depression of the accelerator pedal.

Therefore, the clutch torque gradually increases as shown by a line $l_3$ in Figure 3, as the duty ratio of clutch current gradually increases. The duty ratio ultimately reaches "1" when the rated current flows through the clutch coil. Thus, the rated clutch torque (lock-up torque) $T_2$ is provided as shown by a line $l_4$. The clutch is then fully engaged to drive the vehicle. The above described operation can be carried out by a micro-computer system.

From the foregoing, it will be understood that a system is provided which enables the engine speed to be quickly increased when the accelerator pedal is depressed and which absorbs shock caused by abrupt engagement of the clutch.

**Claims**

1. A system for controlling the clutch torque of an electromagnetic clutch (1) of a vehicle having an accelerator pedal, the system including an accelerator switch (15) for producing a given output signal when the accelerator pedal is depressed, and a first circuit (16—20) which includes a switching means (20) and which is arranged to control the clutch current passing through a coil (6) of the electromagnetic clutch); characterised in that a second circuit is responsive to the given output signal of the accelerator switch (15) for controlling the switching means (20) so as to decrease the clutch current to a low value so that the engine speed quickly increases in accordance with depression of the accelerator pedal, and thereafter to increase the current gradually to a predetermined value.

2. A system according to claim 1, wherein the switching means is a transistor (20) in the circuit of the clutch coil (6).

3. A system according to claim 1 or claim 2, wherein the second circuit comprises a logic gate circuit (24, 29, 31) and a pulse train generating circuit (26, 27) responsive to the given output signal (a) of the accelerator switch (15) for producing a pulse train (g) controlled by the logic gate circuit (24, 29, 31), the duty ratio of the pulse train gradually varying so as to increase gradually the clutch current.

4. A system according to claim 3, wherein the pulse train generating circuit comprises a triangle generator (27) for producing a triangular wave pulse train (d), a reference voltage generator (26) and the output voltage (c) of which gradually increases when the accelerator switch (15) has the given output signal, and a comparator (28) for comparing the triangular wave pulse train (d) with the reference voltage (c) and for producing a rectangular pulse train (e).

5. A system according to claim 4, wherein a vehicle speed switch (16) is arranged to produce a given output signal when the vehicle speed exceeds a predetermined value, that output signal being applied to control the logic gate circuit to allow the rectangular pulse train to pass to the switch means (20).

6. A system according to claim 5, wherein the logic gate circuit (24, 29, 31) is so arranged that when the given output signal is not produced by the accelerator switch and the given output signal is produced by the vehicle speed switch, the output (b) of a rectangular pulse wave oscillator (22) is applied to the switch means (20).

**Patentansprüche**

1. Steuerungssystem für das Kupplungsmoment einer elektromagnetischen Kupplung (1) eines mit einem Beschleunigungspedal ausgestatteten Fahrzeugs, mit einem Beschleunigerschalter (15) zum Erzeugen eines gegebenen Ausgangssignals, wenn das Beschkeunigungspedal freigegeben ist, und mit einem ersten Schaltkreis (16—20), der eine Schalteinrichtung (20) enthält und so angeordnet ist, daß er den durch eine Spule (6) der elektromagnetischen Kupplung fließenden Kupplungsstrom steuert ; dadurch gekennzeichnet, daß ein zweiter Schaltkreis auf das gegebene Ausgangssignal des Beschleunigerschalters (15) anspricht, um die Schalteinrichtung (20) so zu steuern, daß sie den Kupplungsstrom auf einen niedrigen Wert fallen läßt, so daß die Motordrehzahl sich beim Betätigen des Beschleunugingspedals schnell erhöht und ihn anschließend allmählich auf einen vorbestimmten Wert steigert.

2. Steuerungssystem nach Anspruch 1, dadurch gekennzeichnet, daß die Schalteinrichtung ein Transistor (20) im Schaltkreis der Kupplungsspule (6) ist.

3. Steuerungssystem nach Anspruch 1 oder 2 dadurch gekennzeichnet, daß der zweite Schalt-kreis einen logischen Gatterschaltkreis (24, 29, 31) und einen auf das gegebene Ausgangssignal (a) des Beschleunigerschalters (15) ansprechender Schaltkreis (26, 27) zum Erzeugen von Impulszügen aufweist, der vom logischen Gatterschaltkreis (24, 29, 31) gesteuert einen Impulszug (g) erzeugt. dessen Tasterverhältnis sich allmählich so verändert, daß der Kupplungsstrom allmählich ansteigt.

4. Steuerungssystem nach Anspruch 3, dadurch gekennzeichnet, daß der den Impulszug erzeugende Schaltkreis einen Dreiecksgenerator (27) zum Erzeugen eines Dreieckswellen-Impulszuges (d), einen Referenzspannungsgenerator (26), dessen Ausgangsspannung (c) allmählich ansteigt, wenn der Beschleunigerschalter (15) das gegebene Ausgangssignal führt, und einen Vergleicher (28) zum Vergleichen des Dreieckswellen-Impulszuges (d) mit der Referenzspannung (c) und zum Erzeugen eines rechteckigen Impulszuges (e) aufweist.

5. Steuerungssystem nach Anspruch 4, dadurch gekennzeichnet, daß ein Fahrzeuggeschwindigkeitsschalter (16) so angeordnet ist, daß er ein gegebenes Ausgangssignal erzeugt, wenn die Fahrzeuggeschwindigkeit einen vorbestimmten Wert übersteigt, ud baß das Ausgangssignal zum Steuern des logischen Gatterschaltkreises zugeführt wird, un dem rechteckigen Impulszug den Zugang zu der Schalteinrichtung (20) zu ermöglichen.

6. Steuerungssystem nach Anspruch 5, dadurch gekennzeichnet, daß der logische Gatterschaltkreis (24, 29, 31) so angeordnet ist, daß der Ausgang (b) eines Rechteckimpulswellen-Oszillators (22) der Schalteinrichtung (20) zugeführt wird, wenn das gegebene Ausgangssignal nicht vom Beschleunigerschalter, sondern vom Fahrzeuggeschwindkeitsschalter erzeugt wird.

**Revendications**

1. Système ou dispositif pour commander le moment de torsion ou le couple de l'embrayage ou de l'accouplement électromagnétique (1) d'un véhicule ayant und pédale d'accélérateur, qui comprend un commutateur d'accélérateur (15) pour produire un signal de sortie donné quand celle-ci est abaissée, et un premier circuit (16—20) qui comporte des moyens de commutation (20) et qui est conçupour régler le courant d'emprayage circulant dans une bobine (6) de l'embrayage électromagnétique, caractérisé par le présence d'un second circuit qui, en réponse au signal de sortie du commutateur d'accélérateur (15) commande les moyens de commutation (20) de façon à abaisser le courant d'embrayage à une valeur relativement basse, ce qui fait que la vitesse du moteur augmente rapidement en fonction de l'abaissement de la pédale d'accélérateur, et ensuite à augmenter ce courant graduellement à une valeur prédéterminée.

2. Système ou dispositif selon la revendication 1, caractérisé en ce que les moyens de commutation

comprennent un transistor (20) monté dans le circuit de la bobine d'embrayage (6).

3. Système ou dispositif selon la revendication 1 ou 2, caractérisé en ce que le second circuit comprend un circuit de porte logique (24, 29, 31) et un circuit engendrant un train d'impulsions (26, 27) qui, en réponse au signal de sortie donné (a) du commutateur d'accélérateur (15) produit un train d'impulsions (g) commandé par le circuit de porte logique (24, 29, 31), le rapport d'action ou d'efficacité de ce train d'impulsions variant progressivement de façon à augmenter progressivement l'intensité de courant d'embrayage.

4. Système ou dispositif selon la revendication 3, caractérisé en ce que le circuit engendrant ledit train d'impulsions comprend un générateur (27) produisant un train d'impulsions triangulaires (d), un générateur de tension de référence (26) dont la tension de sortie (c) augmente graduellement quand le commutateur d'accélérateur (15) produit le signal de sortie donné, et un comparateur (28) pour comparer le train d'impulsions triangulaires (d) avec la tension de référence (c) et pour produire un train d'impulsions rectangulaires (e).

5. Système ou dispositif selon la revendication 4, caractérisé en ce qu'un commutateur de vitesse de véhicule (16) est arrangé pour produire un signal de sortie donné quand la vitesse du véhicule dépasse une valeur prédéterminée, ce signal de sortie étant utilisé pour commander le circuit de porte logique de manière à permettre au train d'impulsions rectangulaires de gagner les moyens de commutation.

6. Système ou dispositif selon la revendication 5, caractérisé en ce que le circuit de porte logique (24, 29, 31) est conçu pour que quand le signal de sortie donné n'est pas produit par le commutateur d'accélérateur, tandis que le signal de sortie donné est produit par le commutateur de vitesse de véhicule, les signaux de sortie (b) du générateur d'impulsions rectangulaires (22) sont appliqués aux moyens de commutation (20).

# F I G. 1

FIG. 2

ACCELERATOR
PEDAL

RELEASE — DEPRESSION

0 147 228

# FIG. 3

CLUTCH TORQUE

$T_2$ ———————————— $\ell_4$

$\ell_3$

$T_1$ $\ell_1$

$\ell_2$

ACCELERATOR
PEDAL
RELEASE

DEPRESSION

O          TIME          t

# FIG. 4

CLUTCH TORQUE

$T_2$

$T_1$

ACCELERATOR
PEDAL
RELEASE

DEPRESSION

O          TIME          t

3